# EUROPEAN PATENT SPECIFICATION

(11) **EP 4 431 779 B1**
(45) Date of publication and mention of the grant of the patent: **12.11.2025**
(21) Application number: 23162242.4
(22) Date of filing: 16.03.2023
(51) Int. Cl.: F16L 27/108, F16L 51/02, F16L 59/18

(54) **LOW EMISSION EXPANSION JOINT ASSEMBLY**
EMISSIONSARME EXPANSIONSVERBINDUNGSANORDNUNG
ENSEMBLE JOINT DE DILATATION À FAIBLE ÉMISSION

(43) Date of publication of application: 18.09.2024
(73) Proprietor: EagleBurgmann Germany GmbH & Co. KG, 82515 Wolfratshausen (DE)
(72) Inventor: PIZZI, Alessandro, 20854 Vedano al Lambro (MB) (IT)
(74) Representative: Hoefer & Partner Patentanwälte mbB

(56) References cited:
- CN-A- 103 016 890
- CN-U- 2 101 812
- DE-B- 1 034 058
- DE-U1- 9 402 263
- GB-A- 2 299 636
- US-A- 3 460 856
- US-A- 4 140 338
- US-A- 6 027 147

## Description

The invention relates to an expansion joint assembly with low leakage characteristics.

There is an urgent need to reduce emissions across all industrial sectors of global economy in order to avoid dangerous climate changes. Much progress has been made putting in place international and national policies and commitments over recent years ensuring that emissions from particular sectors of the economy start reducing. Due to strict rules around the EU, overall emissions are on a declining trend. In order to ensure that the negative impact on the environment and health is as low as possible and to improve air quality sustainably, some industrial sectors are making big efforts in giving an answer to the society requirements and fulfil approval standards. An often overlooked sector are emissions from the chemical and process industry, that sometimes uses fluids with significant global warming potential. Connecting points between pipes provide weak points for these gases to leak into the atmosphere. Expansion joints, especially for high temperature operations, need insulation to protect the expansion joint layer from heat inside the expansion joint. These additional layers of insulation may lead to an increased leakage through the flange region. CN 2 101 812 U describes a flexible expansion joint composed of several layers: a metal mesh isolation layer, a thermal layer and a base substrate layer. A further flexible expansion joint is described in GB 2 299 636 A. The object of the invention is to provide an expansion joint assembly with low gas emission, especially at high operating temperatures up to 550 °C. Furthermore, the expansion joint should have a low manufacturing cost and easy integratability.

This task is solved by an expansion joint assembly with the features of claim 1. The inventive expansion joint assembly is adapted to connect a first and second duct end and comprises an expansion joint layer, a fastening assembly and a metal foil. One fastening assembly is adapted to be attached at the first duct end and another fastening assembly is adapted to be attached at the second duct end. The fastening assembly at the first duct end fixes a first end of the expansion joint layer between a first face and a second face and the fastening assembly at the second duct end fixes a second end of the expansion joint layer between a first face and a second face. The end parts of the expansion joint layer relate to their ends in axial direction X-X.

The expansion joint layer is thereby spanned between the two duct ends. The metal foil encloses at least one end of the expansion joint layer and is positioned between the expansion joint layer and the first and second face of the fastening assembly, so that it overlays the expansion joint layer in a radially inner portion, a radially outer portion and at a axial end portion. That means, that the end of the expansion joint layer is covered by the metal foil on three sides. The fastening assembly and the outside of the expansion joint layer are leak-proof. Thus, the only escape path for gas inside the duct is through the transition between expansion joint layer and fastening assembly.

The idea of the invention is to enclose the expansion joint layer between the first and second face of the fastening assembly with a metal foil, which inhibits gas from escaping through the transition between the expansion joint layer and the fastening assembly. This results in an expansion joint assembly with low gas emission. The solution also features a low manufacturing cost and is easy to integrate in existing expansion joint assemblies. In case of low operating pressures inside the duct, the inventive expansion joint assembly also prevents gas from the environment to ingress into the expansion joint assembly.

The metal foil preferably encloses both ends of the expansion joint layer. Therefore, the expansion joint assembly can either comprise one metal foil which encloses both ends of the expansion joint layer and is especially provided on the inside of the expansion joint layer, or two metal foils for each axial end of the expansion joint layer.

The duct can be for example a pipe with an annular cross-section or a passage with a rectangular cross-section.

The expansion joint layer is preferably not a metal part but comprises a synthetic material. The subclaims show preferred further embodiments of the invention.

The expansion joint layer preferably comprises multiple layers, including an outside layer, an insulation layer and an inner layer. Thus, each layer can be optimized on a specific task and the performance of the overall expansion joint layer can be improved. For example, the outer layer can be a pressure-carrying layer. The insulation layer can be split into multiple insulating parts and the inner layer can be a mechanical reinforcement for the insulation layer. Furthermore the expansion joint layer can comprise further layers like support layers or flange reinforcement layers. The insulation layer is preferably porous. The outside layer preferably comprises a fibre reinforced PTFE layer.

Further, the insulation layer preferably does not extend until the first end and the second end of the expansion joint, resulting in less layers between the first face and the second face of the fastening assembly. In order to seal the transition between expansion joint layer and fastening assembly, a high contact pressure between the first and second face must be applied to the expansion joint layer. The thick insulation layer does not bear a high contact pressures and deforms under load. Furthermore, the insulation layer does not seal well against gas emissions. Thus, not extending the insulation layer until the first end and the second end of the expansion joint layer further reduces the gas emissions and improves the producibility of the expansion joint assembly.

Particularly preferably, a fibre material is placed between the first and second face of the fastening assembly instead of the insulation layer. The fibre material is preferably connected to the insulation layer outside of the fastening assembly. The connection between the fibre material and the insulation layer can among other things be sewn or glued together. The fibre material is preferably a woven unit and can withstand high contact pressures. Thus replacing the insulation layer between the first and second face of the fastening assembly with a fibre material improves the mountability of the expansion joint layer inside the fastening assembly while at the same time reducing gas emissions.

The fastening assembly is preferably tighten using screws. Therefore, the fastening assembly comprises a radially inner part and a radially outer part being fastened together by screws. The radially inner part includes the first face while the radially outer part includes the second face and wherein the radially outer part and the radially inner part are arranged to each other such that the first face and the second face face each other. The screws link the radially inner part to the radially outer part and tightens the first face and the second face, with the expansion joint layer and the metal foil in between, together. Screws have the benefit that they enable tuning the amount of contact pressure applied to the expansion joint layer. They also provide a detachable connection that simplifies maintenance. The metal foil preferably comprises punched through holes through which the screws are fed through.

Alternatively or in combination with the screw, the expansion joint assembly preferably uses clamps to tighten the first face and second face together. Clamps do not need holes in the fastening assembly, which can provide weak points for sealing the expansion joint assembly against gas emissions.

Further, the metal foil is preferably a composite material, especially a metal foil laminated to a fibre fabric. Fibre fabrics offer good flexible characteristics by adapting to the sealing partners. Furthermore, they provide a good thermal insulation and improve the mechanical properties of the metal foil, especially by preventing the propagation of cracks, which can lead to gas emissions. The fibre fabric is preferably woven or braided.

In a further preferred embodiment, the expansion joint assembly comprises a seal between the first face of the fastening assembly and the metal foil and/or a seal between the second face of the fastening assembly and the metal foil. The additional seal further improves the tightness of the expansion joint assembly against gas emissions by spreading the load of the fastening assembly evenly and avoiding the formation of passages by the metal foil.

The seal is preferably a tape seal. Tape seals can be applied easily and at a low cost. Between the metal foil and the first and/or second face of the fastening assembly, one or multiple lines of tape seal can be applied optimized for the requirement. The tape seal helps to distribute the load between the first and second face of the fastening assembly, the metal foil and the expansion joint layer evenly, thus reducing the risk of leaking passages between the layers. After the mounting of the metal foil, the metal foil can show wrinkles which may lead to escape passages for the process gas. The tape seal helps to reduce wrinkles in the metal foil and further improves the expansion joint assembly's tightness.

The end of the metal foil preferably extends from the fastening assembly axially inwards, away from the fastening assembly. Due to the dynamic operation of the expansion joint assembly, the metal foil can be drawn further into the fastening assembly. Extending metal foil is thereby making sure, that the metal foil completely encloses the expansion joint layer between the first face and the second face of the fastening assembly and thus ensuring the tightness of the expansion joint assembly.

Further, the metal foil preferably has a thickness between 0,025 mm and 0,05 mm and in particular between 0,03 mm and 0,04 mm. This enables a good workability of the metal foil and an easy mounting while at the same time providing resistance to damage.

In a further preferred embodiment, the metal foil is made out of stainless steel. Stainless steel offers a high resistance against corrosive mediums, which could be used inside the duct. The stainless steel foil also features good mechanical properties and high tightness against gas emissions. Thus, the use of stainless steel can increase the lifespan of the metal foil.

A mean roughness value R_{A} of the metal foil is preferably below 0,1 µm. The mean roughness value R_{A} preferably relates to the contact side of the metal foil contacting the fastening assembly on both sides of the metal foil. Roughness peaks and valleys on the metal foil may lead to gas leaking passages. By making sure, that the mean roughness value R_{A} of the metal foil is below 0,1 µm gas emissions of the expansion joint assembly can be reduced.

Furthermore, the expansion joint assembly is preferably adapted for operations up to 550 °C. Expansion joint assemblies are often used at places where high temperatures occur. The metal foil offers a heat resistant sealing solution to prevent gas emissions through the flange of an expansion joint assembly, especially in combination with multilayer expansion joint layers including an insulation layer.

Further details, advantages and features of the present invention will be apparent from the following description of examples of embodiments based on the drawing. It shows in:
- Fig. 1: a schematic sectional view of an expansion joint assembly according to a first embodiment of the invention,
- Fig. 2: a detailed view of the connection between the expansion joint layer and the fastening assembly according to the first embodiment of the invention,
- Fig. 3: a schematic sectional view of an expansion joint assembly according to a second embodiment of the invention, and
- Fig. 4: a schematic sectional view of an expansion joint assembly according to a third embodiment of the invention.

### Embodiments of the invention

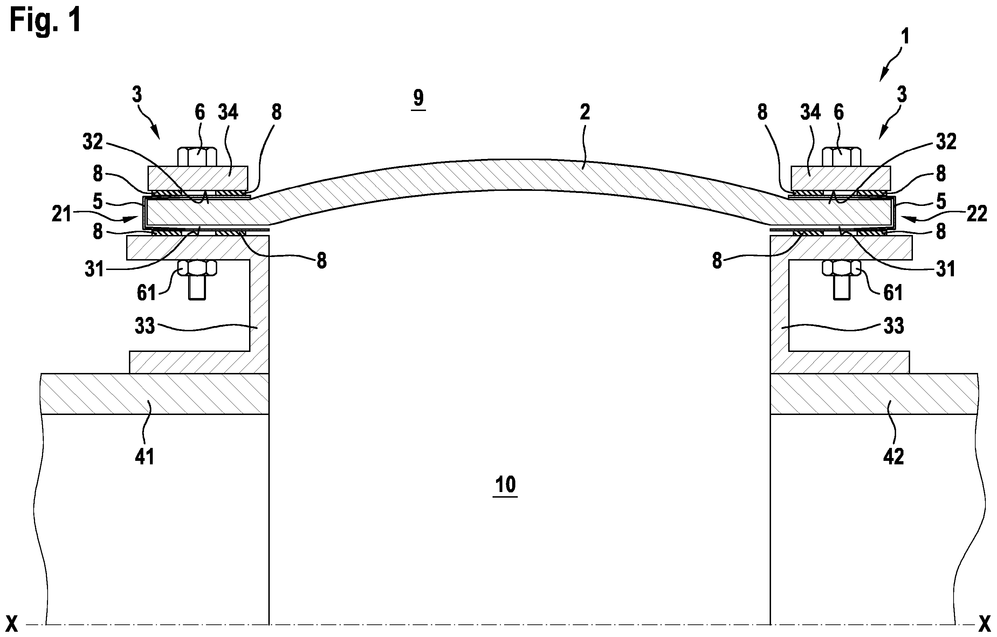

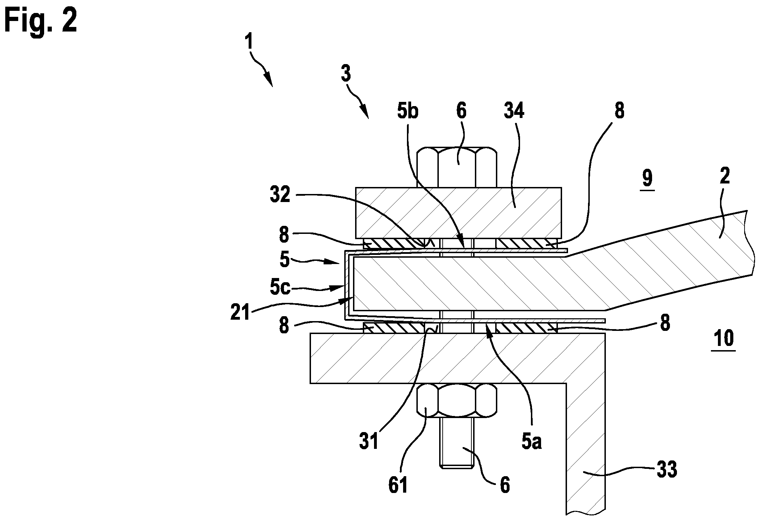

Figure 1 and Figure 2 show a first embodiment of an expansion joint assembly 1. The expansion joint assembly comprises a fastening assembly 3, which is connected to a first duct end 41 and a second duct end 42 and spans an expansion joint layer 2 between them. The expansion joint layer further comprises a metal foil 5 that encloses a first end 21 and a second end 22 of the expansion joint layer 2.

The first duct end 41 and the second duct end 42 share a common central axis X - X. In case of annular ducts the axis X - X is the rotational axis.

The fastening assembly 3 in the first embodiment comprises a radially inner part 33, a radially outer part 34 and a screw 6. The radially inner part 33 is fixed to the first duct end 41 or the second duct end 42. The fixation of the radially inner part 33 to the duct end can for example be done by welding, soldering or with the help of screws. The radially inner part 33 could also be formed out of the duct end.

In the first embodiment, the radially inner part 33 has a C-shaped cross-section, wherein the open part of the C-shape is facing axially outwards towards the environment 9. The radially outward facing side of the radially inner part 33 features a first face 31, which is parallel to the axis X - X.

The radially outer part 34 is positioned radially above the radially inner part 33 with some distance, to grasp the expansion joint layer 2 and the metal foil 5 between the radially inner and outer part 33, 34. The radially outer part 34 has a rectangular cross-section and incorporates a second face 32, which is facing radially inwards from the axis X -X towards the first face 31. The second face 32 is a bit shorter in axial direction than the first face 31 and also parallel to the axis X - X.

The C-shape of the radially inner part 33 together with the rectangular radially outer part 33 facilitates the fastening the radially inner part 33 and radially outer part 34 together. The fastening assembly 3 could also be realized such that the first face 31 and second face 32 are perpendicular to the axis X - X or in a different angle.

In the first embodiment screws 6 are used to fasten the radially outer part 34 and the radially inner part 33 together. Therefore holes have to be integrated into the radially inner part 33 and the radially outer part 34, passing through the first face 31 and second face 32. A nut 61 fastens the screw 6. Alternatively, a thread could be integrated into the radially outer part 34 and/or the radially inner part 33.

The first face 31 and the second face 32 of each fastening assembly 3 are adapted to fix the axial first end 21 and second end 22 of the expansion joint layer 2, respectively. In the first embodiment, the expansion joint layer 2 fills the space between the first face 31 and the second face 32. The first end 21 and the second end 22 of the expansion joint layer 2 lays flush with the axially outer ends of the radially outer part 34.

The expansion joint layer 2 in the first embodiment comprises a single layer. The shape of the expansion joint layer 2 is radially bend outwards but could be implemented in a plurality of different shapes. The expansion joint layer 2 is preferably made out of a synthetic material.

Figure 2 shows the first end 21 of the expansion joint layer 2 according to the first embodiment in detail. The first end 21 of the expansion joint layer 2 is enclosed by the metal foil 5, such that the metal foil 5 overlays the expansion joint layer in a radially inner portion 5a, in a radially outer portion 5b and at an axial end portion 5c. This prohibits gas from the process side 10 from passing through the expansion joint layer 2 between the first face 31 and the second face 32 of the fastening assembly 3 and escaping into the environment 9.

To further improve the tightness of the expansion joint assembly 1 a seal 8 is placed between the metal foil 5 and the first face 31 as well as the second face 32 of the fastening assembly 3. There are two seals 8 in the form of tape seals directed towards the first face 31 and towards the second face 32, respectively. One tape seal is placed axially outside of the screw 6 and another tape seal is placed axially inside of the screw 6 such that it leaves room for the screw 6 to pass through.

This leads to an expansion joint assembly 1 with low gas emission from the process side 10 to the environment 9 or vice versa. The integration of the metal foil 5 to improve the tightness of the expansion joint assembly 1 also offers a low cost solution and is easy to integrate during mounting as well as for improving existing expansion joint assemblies.

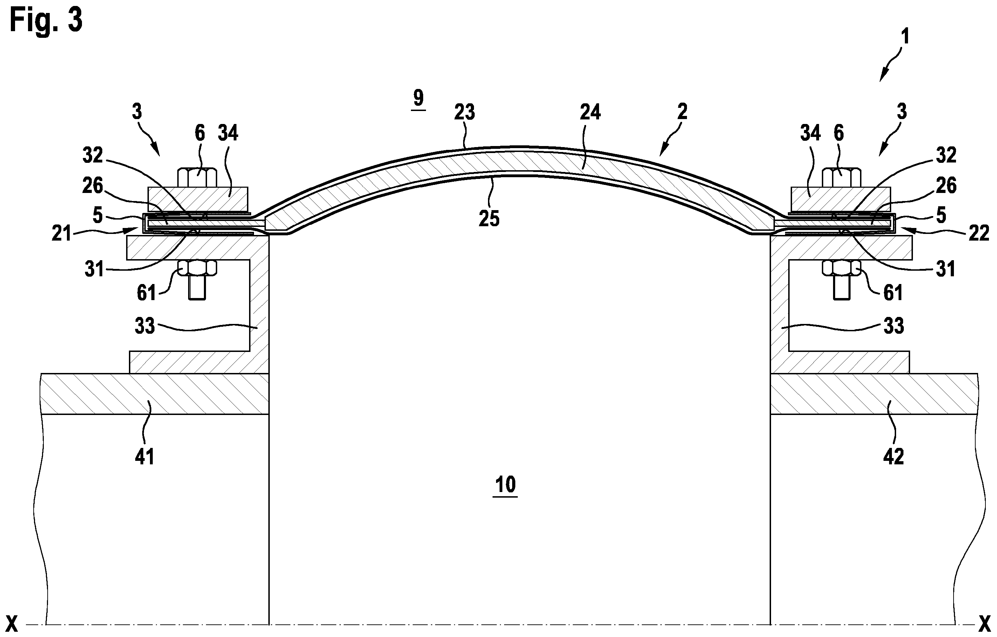

Figure 3 shows a second embodiment of the invention. The fastening assembly 3 and the metal foil 5 of the second embodiment resembles the fastening assembly 3 and the metal foil 5 of the first embodiment. The second embodiment however does not feature a seal 8 between the metal foil 5 and the fastening assembly 3.

A difference between the first and second embodiment of the invention is the expansion joint layer 2. The expansion joint layer 2 of the second embodiment comprises multiple layers. Radially outside it has an outside layer 23 and radially inside an inner layer 25. An insulation layer 24 is arranged between the outer layer 23 and the inner layer 25. The insulation layer 24 helps to protect the expansion joint assembly 1 against high temperatures and protects the process gas against temperature loss. The insulation layer 24 is preferably porous and thicker than the inner layer 25 and the outer layer 23.

The inner layer 25 is preferably a support layer. It should be heat resistant and chemically resistant, as it is in direct contact with the gas on the process side 10.

The outer layer 23 is preferably a pressure-carrying layer, which is tight against gas leakage. It must not be heat resistance as it is insulated by the insulation layer 24.

The inner layer 25 and the outer layer 23 extend through the first face 31 and the second face 32 of the fastening assembly 3. The insulation layer 24 is replaced by a fibre material 26 between the first face 31 and the second face 32 of the fastening assembly 3 on both axial ends. The fibre material 26 is connected to the insulation layer 24 outside of the fastening assembly 3. By replacing the insulation material 24 by the fibre material 26 inside the fastening assembly 3 it is possible to increase the contact pressure applied to the expansion joint layer 2 and thus improving the tightness of the expansion joint assembly 1. Preferably the thickness of the fibre material 26 and the metal foil together is in the range of 0,7 mm to 0,9 mm and preferably is approximately 0,8 mm.

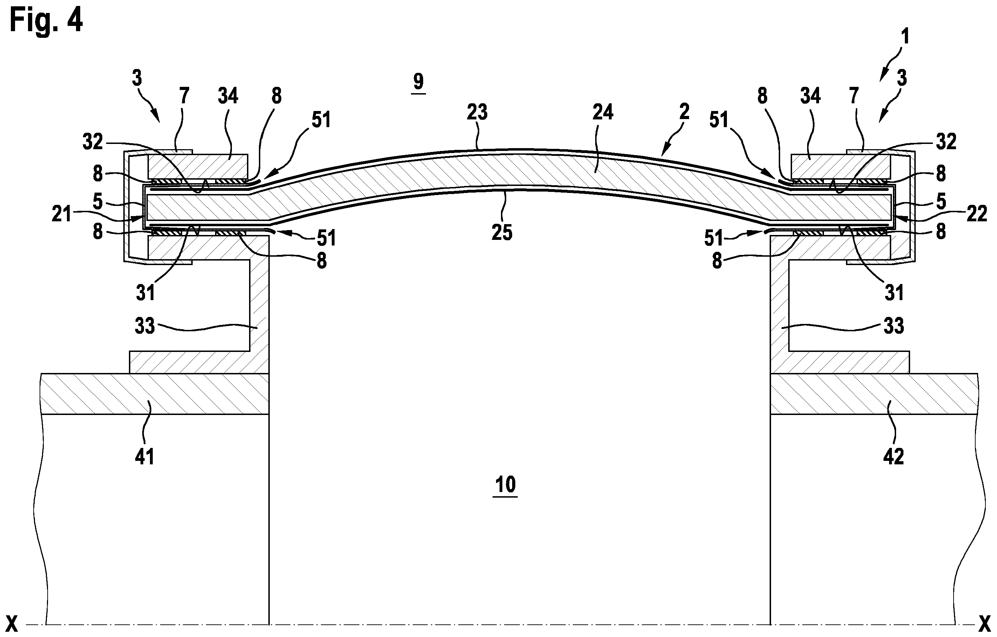

The third embodiment is displayed in figure 4. The fastening assembly 3 of the third embodiment resembles the fastening element 3 of the first embodiment, but uses clamps 7 to fasten the radially outer part 34 to the radially inner part 33. The clamp 7 has a U-shaped cross-section wherein the sidepieces of the U-shape are in contact with the radially outer part 34 and the radially inner part 33. The clamp 7 is tighten by reducing its circumference. The clamp 7 has the big advantage compared to the screw 6, that no holes are needed which provide week spots for gas to escape from the product side.

The third embodiment comprises a seal 8 as shown in the first embodiment, with respectively two tape seals between the metal foil 5 and the first face 31 as well as the second face 32.

The metal foil 5 in the third embodiment resembles the metal foil 5 from the first and second embodiment but offers longer ends 51. The ends 51 of the metal foil 5 reach axially out of the fastening assembly 3 towards the centre of the expansion joint assembly 1, while the ends 51 of the metal foil 5 in the first embodiment laid flush with the radially outer part 34 and the radially inner part 33 of the fastening assembly 3. In operation or during mounting the ends 51 of the metal foil 5 drawn towards the first and second end of the expansion joint layer 21, 22 and show reduced sealing characteristics. The longer ends 51 of the third embodiment ensure that the radially inner portion 5a and the radially outer portion 5b between the expansion joint layer 2 and the fastening assembly 3 are completely covered by the metal foil 5.

The expansion joint layer 2 in the third embodiment has a three-layer design with an inner layer 25, an insulation layer 24 and an outside layer 23, like in the second embodiment of the invention. Unlike the second embodiment, the third embodiment does not have a fibre material 26 layer and the insulation material 24 extends until the end first 21 and second end 22 of the expansion joint layer 2 and finishes flush with the inner layer 25 and the outside layer 23.

In addition to the foregoing written description of the invention, explicit reference is hereby made to the graphic representation of the invention in Figs. 1 to 4 for supplementary disclosure thereof.

### List of reference signs

- 1: Expansion joint assembly
- 2: Expansion joint layer
- 3: Fastening assembly
- 5: Metal foil
- 5a: Radially inner portion
- 5b: Radially outer portion
- 5c: Axial end portion
- 6: Screw
- 7: Clamp
- 8: Seal
- 9: Environment
- 10: Process side
- 21: First end of the expansion joint layer
- 22: Second end of the expansion joint layer
- 23: Outside layer
- 24: Insulation layer
- 25: Inner layer
- 26: Fibre material
- 31: First face
- 32: Second face
- 33: Radially inner part
- 34: Radially outer part
- 41: First duct end
- 42: Second duct end
- 51: End of the metal foil
- 61: Nut
- R_{A}: mean roughness value
- X - X: Central axis

## Claims

1. Expansion joint assembly (1) adapted for flexibly connecting first and second duct ends (41, 42), comprising
- an expansion joint layer (2),
- a fastening assembly (3) adapted for attachment at the first duct end (41) and at the second duct end (42), and
- a metal foil (5),
- wherein the fastening assembly (3) at the first duct end (41) fixes a first end (21) of the expansion joint layer (2) between a first face (31) and a second face (32) of the fastening assembly (3),
- wherein the fastening assembly (3) at the second duct end (42) fixes a second end (22) of the expansion joint layer (2) between a first face (31) and a second face (32) of the fastening assembly (3), and
- wherein the metal foil (5) encloses at least one end of the expansion joint layer (2) between the first face (31) and the second face (32), so that the metal foil (5) overlays the expansion joint layer (2) radially inwards, radially outwards and at the axial end.

2. Expansion joint assembly (1) according to claim 1, wherein the expansion joint layer (2) comprises multiple layers, including an outside layer (23), an insulation layer (24) and an inner layer (25).

3. Expansion joint assembly (1) according to claim 2, wherein the insulation layer (24) does not extend until the first end (21) and the second end (22) of the expansion joint layer (2).

4. Expansion joint assembly (1) according to claim 3, wherein a fibre material (26) is placed between the first face (31) and the second face (32) of the fastening assembly (3) and connected to the insulation layer (24).

5. Expansion joint assembly (1) according to any one of the preceding claims, wherein the first face (31) and the second face (32) of the fastening assembly (3) are adapted to be tighten using screws (6).

6. Expansion joint assembly (1) according to any of the claims 1 to 4, wherein the first face (31) and the second face (32) of the fastening assembly (3) are adapted to be tighten using clamps (7).

7. Expansion joint assembly (1) according to any one of the preceding claims, wherein the metal foil (5) is a composite material, especially a metal foil (5) laminated to a fibre fabric.

8. Expansion joint assembly (1) according to any one of the preceding claims, wherein the expansion joint assembly (1) comprises a seal (8) between the first face (31) of the fastening assembly (3) and the metal foil (5) and/or a seal (8) between the second face (32) of the fastening assembly (3) and the metal foil (5).

9. Expansion joint assembly (1) according to claim 8, wherein the seal (8) is a tape seal.

10. Expansion joint assembly (1) according to any one of the preceding claims, wherein an end of the metal foil (51) extends from the fastening assembly (3) axially (X - X) inwards, away from the fastening assembly (3).

11. Expansion joint assembly (1) according to any one of the preceding claims, wherein the metal foil (5) has a thickness between 0,025 mm and 0,05 mm.

12. Expansion joint assembly (1) according to any one of the preceding claims, wherein the metal foil (5) is made of stainless steel.

13. Expansion joint assembly (1) according to any one of the preceding claims, wherein a mean roughness value R_{A} of the metal foil (5) is below 0,1 µm.

14. Expansion joint assembly (1) according to any one of the preceding claims, wherein the expansion joint assembly (1) is adapted for operation temperatures up to 550 °C.

## Patentansprüche

1. Expansionsverbindungsanordnung (1), die zum flexiblen Verbinden eines ersten und eines zweiten Leitungsendes (41, 42) ausgelegt ist, umfassend
- eine Expansionsverbindungsschicht (2),
- eine Befestigungsanordnung (3), die zum Anbringen an dem ersten Leitungsende (41) und an dem zweiten Leitungsende (42) ausgelegt ist, und
- eine Metallfolie (5),
- wobei die Befestigungsanordnung (3) an dem ersten Leitungsende (41) ein erstes Ende (21) der Expansionsverbindungsschicht (2) zwischen einer ersten Fläche (31) und einer zweiten Fläche (32) der Befestigungsanordnung (3) fixiert,
- wobei die Befestigungsanordnung (3) an dem zweiten Leitungsende (42) ein zweites Ende (22) der Expansionsverbindungsschicht (2) zwischen einer ersten Fläche (31) und einer zweiten Fläche (32) der Befestigungsanordnung (3) fixiert, und
- wobei die Metallfolie (5) mindestens ein Ende der Expansionsverbindungsschicht (2) zwischen der ersten Fläche (31) und der zweiten Fläche (32) umschließt, so dass die Metallfolie (5) die Expansionsverbindungsschicht (2) radial nach innen, radial nach außen und an dem axialen Ende überlagert.

2. Expansionsverbindungsanordnung (1) nach Anspruch 1, wobei die Expansionsverbindungsschicht (2) mehrere Schichten umfasst, einschließlich einer Außenschicht (23), einer Isolierschicht (24) und einer Innenschicht (25).

3. Expansionsverbindungsanordnung (1) nach Anspruch 2, wobei sich die Isolierschicht (24) nicht bis zu dem ersten Ende (21) und dem zweiten Ende (22) der Expansionsverbindungsschicht (2) erstreckt.

4. Expansionsverbindungsanordnung (1) nach Anspruch 3, wobei ein Fasermaterial (26) zwischen der ersten Fläche (31) und der zweiten Fläche (32) der Befestigungsanordnung (3) platziert und mit der Isolierschicht (24) verbunden ist.

5. Expansionsverbindungsanordnung (1) nach einem der vorhergehenden Ansprüche, wobei die erste Fläche (31) und die zweite Fläche (32) der Befestigungsanordnung (3) dazu ausgelegt sind, unter Verwendung von Schrauben (6) festgezogen zu werden.

6. Expansionsverbindungsanordnung (1) nach einem der Ansprüche 1 bis 4, wobei die erste Fläche (31) und die zweite Fläche (32) der Befestigungsanordnung (3) dazu ausgelegt sind, unter Verwendung von Klemmen (7) festgezogen zu werden.

7. Expansionsverbindungsanordnung (1) nach einem der vorhergehenden Ansprüche, wobei die Metallfolie (5) ein Verbundmaterial ist, insbesondere eine Metallfolie (5), die auf ein Fasergewebe laminiert ist.

8. Expansionsverbindungsanordnung (1) nach einem der vorhergehenden Ansprüche, wobei die Expansionsverbindungsanordnung (1) eine Dichtung (8) zwischen der ersten Fläche (31) der Befestigungsanordnung (3) und der Metallfolie (5) und/oder eine Dichtung (8) zwischen der zweiten Fläche (32) der Befestigungsanordnung (3) und der Metallfolie (5) umfasst.

9. Expansionsverbindungsanordnung (1) nach Anspruch 8, wobei die Dichtung (8) eine Banddichtung ist.

10. Expansionsverbindungsanordnung (1) nach einem der vorhergehenden Ansprüche, wobei sich ein Ende der Metallfolie (51) von der Befestigungsanordnung (3) axial (X-X) nach innen weg von der Befestigungsanordnung (3) erstreckt.

11. Expansionsverbindungsanordnung (1) nach einem der vorhergehenden Ansprüche, wobei die Metallfolie (5) eine Dicke zwischen 0,025 mm und 0,05 mm aufweist.

12. Expansionsverbindungsanordnung (1) nach einem der vorhergehenden Ansprüche, wobei die Metallfolie (5) aus rostfreiem Stahl hergestellt ist.

13. Expansionsverbindungsanordnung (1) nach einem der vorhergehenden Ansprüche, wobei ein mittlerer Rauheitswert R_{A} der Metallfolie (5) unter 0,1 µm liegt.

14. Expansionsverbindungsanordnung (1) nach einem der vorhergehenden Ansprüche, wobei die Expansionsverbindungsanordnung (1) für Betriebstemperaturen bis zu 550 °C ausgelegt ist.

## Revendications

1. Ensemble joint de dilatation (1) adapté pour relier de manière flexible des première et seconde extrémités de conduit (41, 42), comprenant :
- une couche de joint de dilatation (2),
- un ensemble de fixation (3) adapté pour une fixation au niveau de la première extrémité de conduit (41) et au niveau de la seconde extrémité de conduit (42), et
- une feuille métallique (5),
dans lequel l'ensemble de fixation (3) au niveau de la première extrémité de conduit (41) fixe une première extrémité (21) de la couche de joint de dilatation (2) entre une première face (31) et une seconde face (32) de l'ensemble de fixation (3),
dans lequel l'ensemble de fixation (3) au niveau de la seconde extrémité de conduit (42) fixe une seconde extrémité (22) de la couche de joint de dilatation (2) entre une première face (31) et une seconde face (32) de l'ensemble de fixation (3), et
dans lequel la feuille métallique (5) entoure au moins une extrémité de la couche de joint de dilatation (2) entre la première face (31) et la seconde face (32), de sorte que la feuille métallique (5) recouvre la couche de joint de dilatation (2) radialement vers l'intérieur, radialement vers l'extérieur et au niveau de l'extrémité axiale.

2. Ensemble joint de dilatation (1) selon la revendication 1, dans lequel la couche de joint de dilatation (2) comprend de multiples couches, comprenant une couche extérieure (23), une couche d'isolation (24) et une couche interne (25).

3. Ensemble joint de dilatation (1) selon la revendication 2, dans lequel la couche d'isolation (24) ne s'étend pas jusqu'à la première extrémité (21) et la seconde extrémité (22) de la couche de joint de dilatation (2).

4. Ensemble joint de dilatation (1) selon la revendication 3, dans lequel un matériau fibreux (26) est placé entre la première face (31) et la seconde face (32) de l'ensemble de fixation (3) et relié à la couche d'isolation (24).

5. Ensemble joint de dilatation (1) selon l'une quelconque des revendications précédentes, dans lequel la première face (31) et la seconde face (32) de l'ensemble de fixation (3) sont adaptées pour être serrées en utilisant des vis (6).

6. Ensemble joint de dilatation (1) selon l'une quelconque des revendications 1 à 4, dans lequel la première face (31) et la seconde face (32) de l'ensemble de fixation (3) sont adaptées pour être serrées en utilisant des pinces (7).

7. Ensemble joint de dilatation (1) selon l'une quelconque des revendications précédentes, dans lequel la feuille métallique (5) est un matériau composite, en particulier une feuille métallique (5) stratifiée sur un tissu en fibre.

8. Ensemble joint de dilatation (1) selon l'une quelconque des revendications précédentes, dans lequel l'ensemble joint de dilatation (1) comprend un joint d'étanchéité (8) entre la première face (31) de l'ensemble de fixation (3) et la feuille métallique (5) et/ou un joint d'étanchéité (8) entre la seconde face (32) de l'ensemble de fixation (3) et la feuille métallique (5).

9. Ensemble joint de dilatation (1) selon la revendication 8, dans lequel le joint d'étanchéité (8) est un ruban d'étanchéité.

10. Ensemble joint de dilatation (1) selon l'une quelconque des revendications précédentes, dans lequel une extrémité de la feuille métallique (51) s'étend depuis l'ensemble de fixation (3) axialement (X - X) vers l'intérieur, loin de l'ensemble de fixation (3).

11. Ensemble joint de dilatation (1) selon l'une quelconque des revendications précédentes, dans lequel la feuille métallique (5) a une épaisseur comprise entre 0,025 mm et 0,05 mm.

12. Ensemble joint de dilatation (1) selon l'une quelconque des revendications précédentes, dans lequel la feuille métallique (5) est réalisée en acier inoxydable.

13. Ensemble joint de dilatation (1) selon l'une quelconque des revendications précédentes, dans lequel la valeur de rugosité moyenne R_{A} de la feuille métallique (5) est inférieure à 0,1 µm.

14. Ensemble joint de dilatation (1) selon l'une quelconque des revendications précédentes, dans lequel l'ensemble joint de dilatation (1) est adapté à des températures de fonctionnement allant jusqu'à 550°C.
